# EUROPÄISCHE PATENTANMELDUNG

(11) **EP 1 818 887 A2**
(43) Veröffentlichungstag der Anmeldung: **15.08.2007**
(21) Anmeldenummer: 06127047.6
(22) Anmeldetag: 22.12.2006
(51) Int. Cl.: G08C 17/02

(54) **Verfahren zum Überwachen und Steuern von für eine Elektroinstallation an einen Bus angeschlossenen Busteilnehmern**

(30) Priorität: 09.02.2006 DE 102006006039
(71) Anmelder: SIEMENS AKTIENGESELLSCHAFT, 80333 München (DE)
(72) Erfinder: Knorr, Christian, 93087, Alteglofsheim (DE)

(57) **Zusammenfassung**

Ein Gateway-Busteilnehmer hat sowohl eine Schnittstelle zu einem Bussystem für eine Elektroinstallation, als auch zu einem Telekommunikationsnetz. Er kann vermittels Short-Message-Service (SMS) Befehle von einem anderen Teilnehmer des Telekommunikationsnetzes empfangen, um Steuerbefehle an die anderen Busteilnehmer abzugeben. Erfindungsgemäß hilft der Gateway-Busteilnehmer dem Teilnehmer des Telekommunikationsnetzes hierbei dadurch, dass er auf Anfrage hin Teilbefehle vervollständigt und an den Benutzer eine Nachricht mit genaueren Teilbefehlen oder vollständigen Befehlen sendet, so dass der Benutzer eine Auswahl wie bei einem Menü treffen kann. Schließlich hat sich der Benutzer einen Vollbefehl erarbeitet, ohne ihn vorher als solchen gekannt zu haben.

## Beschreibung

Die Erfindung betrifft ein Verfahren zum Überwachen und Steuern von für eine Elektroinstallation an einen Bus angeschlossenen Busteilnehmern, bei dem Überwachungsanfragen und Steuerbefehle in Form von elektronischen Textnachrichten mittels eines Telekommunikationsnetzes von einem Teilnehmer des Telekommunikationsnetzes zu einem Gateway-Busteilnehmer gesandt werden, der sowohl eine Schnittstelle zum dem Telekommunikationsnetz als auch zu dem Bus aufweist und definierte elektronische Textnachrichten in bestimmte Bussignale übersetzt.

Aus der WO 03/036397 A1 ist ein solches Gateway bekannt. Insbesondere ist die Verwendung elektronischer Textnachrichten wie beispielsweise SMS (Short Message Service - Nachrichten) zur Fernsteuerung von Vorrichtungen bekannt.

Die bei der Fernsteuerung eines Bussystems mit Hilfe von Telekommunikationsgeräten an dem Gateway benötigten Schnittstellen sind insbesondere in der DE 100 00 609 A1 beschrieben.

Das Erzeugen und Senden von SMS-Nachrichten aufgrund einer Menüauswahl ist in der EP 1 317 152 A2 beschrieben.

Bei der Fernsteuerung von Busgeräten mit Hilfe von SMS-Nachrichten muss bisher ein bestimmter Code verwendet werden. Für den menschlichen Benutzer ist es schwierig, einen solchen Code derart zu beherrschen, dass die Eingabe fehlerfrei wird. Bei einer hohen Anzahl von möglichen beteiligten Busgeräten wie Sensoren und Aktoren steigt die Komplexität der benötigten SMS-Struktur. Bisher nimmt man eine schlechte Bedienbarkeit in Kauf oder schränkt die Zahl der mit Hilfe von SMS angesteuerten Busgeräte ein.

Es ist Aufgabe der Erfindung, die Möglichkeiten der Verwendung von elektronischen Textnachrichten in optimaler Weise zu nutzen.

Zur Lösung der Aufgabe stellt die Erfindung ein Verfahren gemäß Patentanspruch 1 bereit. Das erfindungsgemäße Verfahren ist somit gekennzeichnet durch die Schritte:
a) Senden einer elektronischen Textnachricht mit einer Kennung durch den Teilnehmer des Telekommunikationsnetzes an den diesen empfangenden Gateway-Busteilnehmer,
b) Lesen der elektronischen Textnachricht und Erkennen der Kennung durch den Gateway-Busteilnehmer sowie Zusenden einer elektronischen Textnachricht an den Teilnehmer des Telekommunikationsnetzes durch den Gateway-Busteilnehmer, wobei die zugesandte elektronische Textnachricht eine anhand der empfangenen Textnachricht erstellte Auswahl von möglichen Textnachrichten höherer Stufe (als die im Schritt a) gesendete Textnachricht) umfasst,
c) Wiederholen der Schritte a) und b), wobei bei jeder Wiederholung von Schritt a) eine Textnachricht jeweils höherer Stufe aus der Auswahl zusammen mit der Kennung gesendet wird, solange bis in Schritt b) eine Auswahl von definierten elektronischen Textnachrichten zugesandt wird und dadurch zu Schritt d) übergegangen werden kann:
d) Senden einer definierten elektronischen Textnachricht (insbesondere ohne Kennung) an den Gateway-Busteilnehmer und dadurch Abgeben einer Überwachungsanfrage oder eines Steuerbefehls an den Gateway-Busteilnehmer.

Der Gateway-Busteilnehmer wandelt dann wie eingangs erwähnt die definierte elektronische Textnachricht in bestimmte Bussignale um.

Die Erfindung stellt kurz gesagt ein mithelfendes Gateway (bzw. einen mithelfenden Gateway-Busteilnehmer) bereit. Der Benutzer muss die genauen Befehle oder Codes nicht mehr auswendig kennen (also die definierten elektronischen Textnachrichten), sondern der Gateway-Busteilnehmer hilft dem Benutzer, in dem nach und nach das Senden der definierten elektronischen Textnachricht durch den Benutzer vorbereitet bzw. "erarbeitet" wird.

Theoretisch kann die elektronische Textnachricht ein E-Mail sein. Bevorzugt wird hier jedoch mit SMS-Nachrichten gearbeitet, weil diese von vielerorts zur Verfügung stehenden Mobiltelefonen abgegeben werden können. Der Besitzer des Mobiltelefons kann sich an jedem beliebigen Ort befinden, ohne eine Dokumentation über den abzugebenden Code zu haben. Er muss lediglich eine Kennung an den Gateway-Busteilnehmer senden.

Hierbei kann im Schritt a) (bei dessen ersten Durchlauf) die elektronische Textnachricht ausschließlich aus der Kennung bestehen. Mit anderen Worten muss der Benutzer den Steuerbefehl überhaupt nicht kennen, sondern es genügt die Kennung. Die Kennung kann ein bestimmtes Zeichen oder eine Zeichenfolge umfassen, z. B. ein einfaches Fragezeichen sein. Eine solche Kennung ist leicht zu merken. Ansonsten erhält deren Benutzer bis zur Abgabe der definierten elektronischen Textnachricht ausführliche Hilfe.

Bevorzugt wird bei der Erfindung eine elektronische Textnachricht höherer Stufe dadurch erstellt, dass zu einer vorigen Textnachricht ein Zeichen oder eine Zeichenfolge hinzugefügt wird.

Das Zeichen oder die Zeichenfolge kann vorne oder hinten an die Textnachricht angefügt werden oder auch in die Mitte eingefügt werden. Herkömmlicherweise wird man dazu neigen, das Einfügen der Zeichen oder der Zeichenfolge hinter den bisherigen Text zu bevorzugen.

Die Auswahl höherer Stufen, welche von dem Gateway-Busteilnehmer an den Teilnehmer des Telekommunikationsnetzes gesandt wird, entspricht also einer Auswahl verschiedener an den bisher gesandten Text hinzugefügter Zeichen bzw. Zeichenfolgen. Hierbei können die Zeichenfolgen insbesondere Worte sein, die so aussagekräftig sind, dass der Benutzer Aufschluss über die von ihm entworfenen Anfragen bzw. Befehle gewinnt.

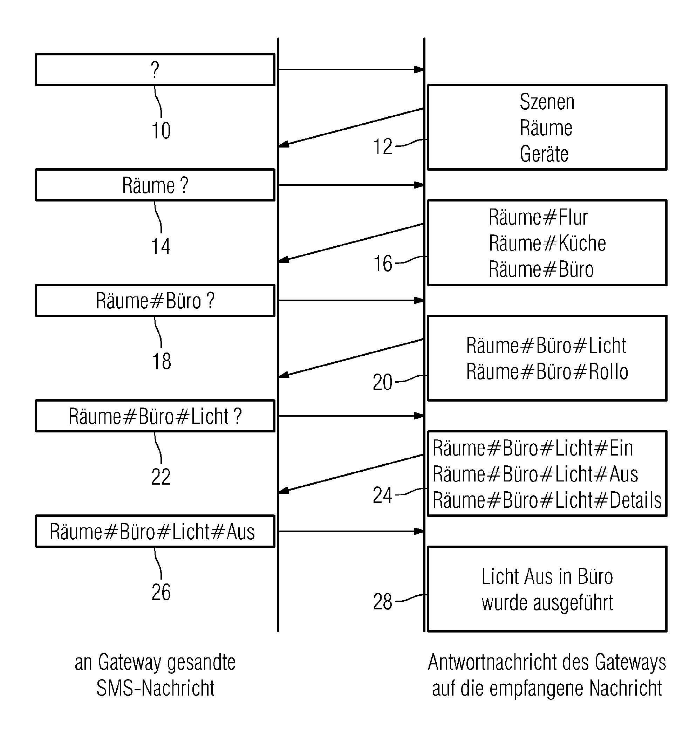

Insbesondere letzteres wird durch die nachfolgende Beschreibung einer bevorzugten Ausführungsform noch klarer. Bei der der nachfolgenden Beschreibung wird Bezug auf die Zeichnung genommen, wobei die FIG den Austausch von Nachrichten zwischen dem Gateway-Busteilnehmern und dem Teilnehmer des Telekommunikationsnetzwerkes durch Darstellung beispielhafter Nachrichten veranschaulicht.

Bei dem in der FIG dargestellten Dialog handelt es sich um den Dialog eines beliebigen Teilnehmers eines Telekommunikationsnetzwerkes, z. B. den Benutzer eines Telefons mit SMS-Funktion, mit einem bestimmten Gerät in einem Bussystem, das sich dadurch auszeichnet, dass es sowohl eine Schnittstelle zu dem Bussystem als auch zu dem Telefontelekommunikationssystem aufweist. Das Gerät, auch als Gateway-Busgerät oder kurz als Gateway bezeichnet, ist in der Lage, SMS-Nachrichten zu empfangen und dahingehend auszuwerten, dass es aufgrund von bestimmten empfangenen SMS-Nachrichten bestimmte Signale in das Bussystem abgibt, z. B. Steuerbefehle für Sensoren und Aktoren.

Es ist somit möglich, mit Hilfe von SMS-Nachrichten über den Umweg des Gateways Sensoren und Aktoren in dem Bussystem zu steuern.

Da die Befehle eine bestimmte Struktur haben müssen, um von dem Gateway korrekt interpretiert werden zu können, hilft das Gateway dem Benutzer bei der Formulierung der Befehle. Dies geschieht durch mehrfachen Austausch von SMS-Nachrichten.

Im Falle, dass der Benutzer von Anfang an Formulierungshilfe braucht, beginnt er mit einer Nachricht, die in der FIG mit 10 bezeichnet ist, und die eine elektronische Textnachricht vom Umfang Null mit einer Kennung umfasst, wobei vorliegend als Kennung ein einziges Fragezeichen verwendet wird. Mit anderen Worten sendet der Benutzer ausschließlich die Kennung, also das Fragezeichen an das Gateway. Als Antwort erhält er von dem Gateway eine SMS-Nachricht 12, die ihm Formulierungen für die Anfangsworte der zu verwendenden Codes, d. h. der zu verwendenden definierten elektronischen Textnachrichten, vorgeben. Vorliegend kann der Benutzer sich entscheiden, ob er bestimmte Szenen abfragen bzw. ansteuern möchte. Szenen sind Zusammenfassungen von verschiedenen Aufgaben verschiedener Aktoren und Sensoren. Beispielsweise kann zwischen Abendbeleuchtung und Nachtbeleuchtung unterschieden werden oder zwischen Beleuchtung beim Fernsehen und beim Arbeiten. Er kann auch Befehle auswählen, die auf ganz bestimmte Räume bezogen sind oder ganz bestimmte Geräte bezogen sind.

Vorliegend gibt der Benutzer im Schritt 14 zu erkennen, dass er eine Auswahl bestimmter Räume vorgeben will. Er sendet an das Gateway die SMS-Nachricht 14, wobei also das Wort Räume der Kennung "?" voran geht. In Antwort auf diese elektronische Textnachricht erhält der Benutzer die mit 16 bezeichnete SMS-Nachricht. Gegenüber der Textnachricht "Räume" stellen die Textnachrichten "Räume#Flur", "Räume#Küche", "Räume#Büro" Textnachrichten einer höheren Stufe dar. Es wird dadurch simuliert, dass sich der Benutzer in einem Menü schrittweise voranarbeitet. Vorliegend kann der Benutzer auswählen, ob eine Anfrage oder ein Befehl den Flur, die Küche oder das Büro betrifft.

Im Schritt 18 gibt der Benutzer die elektronische Textnachricht "Räume#Büro" mit der nachfolgenden Kennung "?" ab (Nachricht 18), und erhält in Antwort darauf von dem Gateway die SMS-Nachricht 20, nämlich eine Auswahl von möglichen Textnachrichten einer noch höheren Stufe, wobei vorliegend zwischen dem Licht im Büroraum und einem Rollo im Büroraum unterschieden wird, die beide ansteuerbar sind.

In Antwort darauf gibt der Benutzter eine der Textnachrichten aus dieser Auswahl 20 zusammen mit der Kennung "?" als SMS 22 an das Gateway zurück und erhält eine Auswahl von möglichen Textnachrichten noch höherer Stufe, nämlich SMS-Nachricht 24. Es besteht die Alternative, dass das Licht ein- oder ausgeschaltet werden soll. Schließlich besteht noch eine weitere Nachricht, dass Details über das Licht abgefragt werden sollen. Während die Textnachrichten "Räume#Büro#Licht#Details" noch Textnachrichten weiterer höherer Stufen auslösen kann, sind die beiden ersten Textnachrichten "Räume#Büro#Licht#Ein" und "Räume#Büro#Licht#Aus" definierte elektronische Textnachrichten, die als solche genügen, um als Steuerbefehl zum Ein- bzw. Ausschalten des Lichts in dem Büroraum zu dienen.

Entsprechend besteht die Möglichkeit, den Zyklus aus Senden und Empfangen von elektronischen Textnachrichten zu beenden.

Somit kann der Benutzer an das Gateway die mit 26 gekennzeichnete Botschaft "Räume#Büro#Licht#Aus" senden, und zwar ohne die Kennung. Durch das Fehlen der Kennung bei gleichzeitiger Verwendung eines Standart-Steuerbefehls wird das Gateway dazu veranlasst, die SMS-Nachricht 26 als Anfrage oder Befehl zu erkennen, vorliegend als Steuerbefehl. Das Gateway gibt entsprechende Bussignale in den Bus ab, die an die entsprechenden Aktoren im Büroraum adressiert sind, um das Licht auszuschalten. Das Gateway erhält von den Aktoren eine Bestätigung, dass das Licht ausgeschaltet wird. Eine solche Bestätigung sendet das Gateway auch als SMS an den Benutzer, und zwar durch die in der FIG mit 28 gekennzeichneten Nachricht.

Bei dem in der FIG veranschaulichten Verfahren braucht der Benutzer somit zu Beginn nur die Kennung zu kennen und wird dann angeleitet, nach und nach den richtigen Steuerbefehl zu erarbeiten, bis er schließlich keine weiteren Nachfragen mehr benötigt (und im Schritt 26 angekommen ist).

Fortgeschrittene Benutzer können natürlich anstelle mit der SMS-Nachricht 10 an beliebiger Stelle beginnen, also gleich zu Beginn die Nachricht 14, 18, 22 oder sogar 26 eingeben.

Durch die Bereitstellung eines intelligenten Gateways wird es möglich, dass ein beliebiger externer Teilnehmer des Telekommunikationsnetzes auf den Bus zugreift und hierbei fast mit der Bequemlichkeit einer herkömmlichen Menübedienung arbeiten kann. Insbesondere muss der Benutzer keine Codes oder dezidierte Steuerbefehle mehr kennen, sondern kann diese durch die Verwendung einer einfachen Kennung erfragen.

## Patentansprüche

1. Verfahren zum Überwachen und Steuern von für eine Elektroinstallation an einen Bus angeschlossenen Busteilnehmern, bei dem Überwachungsanfragen und Steuerbefehle in Form von elektronischen Textnachrichten (10), (14), (18), (22), (26) vermittels eines Telekommunikationsnetzes von einem Teilnehmer des Telekommunikationsnetzes zu einem Gateway-Busteilnehmer gesandt werden, der sowohl eine Schnittstelle zu dem Telekommunikationsnetz, als auch zu dem Bus aufweist und definierte elektronische Textnachrichten (26) in bestimmte Bussignale übersetzt,
**gekennzeichnet durch** die Schritte:
a) Senden einer elektronischen Textnachricht (10, 14, 18, 22) mit einer Kennung **durch** den Teilnehmer des Telekommunikationsnetzes an den diese empfangenden Gateway-Busteilnehmer,
b) Lesen der elektronischen Textnachricht (10, 14, 18, 22) und Erkennen der Kennung **durch** den Gateway-Busteilnehmer und Zusenden einer elektronischen Textnachricht (12, 16, 20, 24) an den Teilnehmer des Telekommunikationsnetzes **durch** den Gateway-Busteilnehmer, wobei die zugesandte elektronische Textnachricht eine anhand der empfangen Textnachricht erstellte Auswahl von möglichen Textnachrichten höherer Stufe umfasst,
c) Wiederholen der Schritte a) und b), wobei bei jeder Wiederholung von Schritt a) eine Textnachricht jeweils höherer Stufe aus der Auswahl zusammen mit der Kennung gesendet wird, mindestens so lange bis in Schritt b)eine Auswahl mit zumindest einer definierten elektronischen Textnachricht zugesandt wird, wobei dann zu Schritt d) übergegangen werden kann:
d) Senden einer definierten elektronischen Textnachricht (26) an den Gateway-Busteilnehmer und da- **durch** Abgeben einer Überwachungsanfrage oder eines Steuerbefehls an den Gateway-Busteilnehmer.

2. Verfahren nach Anspruch 1,
**dadurch gekennzeichnet, dass**
jede elektronische Textnachricht eine Short-Message-Service-Nachricht (SMS-Nachricht) ist.

3. Verfahren nach Anspruch 1 oder 2
**dadurch gekennzeichnet, dass**
im Schritt a) die elektronische Textnachricht ausschließlich aus der Kennung besteht.

4. Verfahren nach einem der vorhergehenden Ansprüche,
**dadurch gekennzeichnet, dass**
die Kennung ein bestimmtes Zeichen oder eine Zeichenfolge umfasst.

5. Verfahren nach Anspruch 4
**dadurch gekennzeichnet, dass**
die Kennung ein einfaches Fragezeichen ist.

6. Verfahren nach einem der vorhergehenden Ansprüche,
**dadurch gekennzeichnet, dass**
eine elektronische Textnachricht höherer Stufe **dadurch** erstellt wird, dass zu einer vorherigen Textnachricht ein Zeichen oder eine Zeichenfolge hinzugefügt wird.
